# EUROPÄISCHE PATENTSCHRIFT

(11) **EP 1 394 464 B1**
(45) Veröffentlichungstag und Bekanntmachung des Hinweises auf die Patenterteilung: **23.11.2005**
(21) Anmeldenummer: 03018587.0
(22) Anmeldetag: 18.08.2003
(51) Int. Cl.: F17D 3/08

(54) **Molch zur Förderung eines Beschichtungsmaterials und Verfahren zu seiner Herstellung**
Pig for feeding of coating material and process for making the same
Racleur pour la founiture de matériau de revêtement et procédé pour sa fabrication

(30) Priorität: 30.08.2002 DE 10240072
(43) Veröffentlichungstag der Anmeldung: 03.03.2004
(73) Patentinhaber: Dürr Systems GmbH, 70435 Stuttgart (DE)
(72) Erfinder: Martin, Herbert, 71384 Weinstadt (DE); Schwager, Werner, 71642 Ludwigsburg (DE); Stiegler, Martin, 71711 Steinheim (DE); Collmer, Andreas, 71665 Vaihingen/Enz (DE); Michelfelder, Manfred, 71711 Steinheim (DE)
(74) Vertreter: Heusler, Wolfgang

(56) Entgegenhaltungen:
- EP-A- 1 108 475
- DE-A- 19 733 531
- US-A- 5 127 125

## Beschreibung

Die Erfindung betrifft einen Molch zur Förderung eines Beschichtungsmaterials und ein Verfahren zu seiner Herstellung gemäß dem Oberbegriff der unabhängigen Patentansprüche.

Beispielsweise kann der Molch zur Förderung von Beschichtungsmaterial und Löse- oder Verdünnermedien in den bekanten Anlagen zur elektrostatischen Beschichtung von Werkstücken wie Fahrzeugkarossen dienen (DE 198 30 029, EP 0 904 848, EP 1 172 152, EP 1 172 153, EP 1 108 475 usw.), wobei er seinerseits von einem flüssigen oder gasförmigen Schiebemedium angetrieben wird.

Für derartige Zwecke werden an den Molch zahlreiche zum Teil schwierig erfüllbare Anforderungen gestellt. Dazu gehören u.a. geringe Baugröße und die Fähigkeit, mit relativ kleinen Radien gebogene Schläuche zu durchfahren, Anpassung der Dichtkraft bei steigendem Schiebedruck, Bewegbarkeit in beiden Richtungen und vollkommene Dichtheit auch bei langsamen Bewegungen (z.B. weniger als 1 m/s). Bei dem Aufbau von Isolierstrecken in Leitungen elektrostatischer Anlagen soll er vollständige Entleerung der Leitung durch restloses Abstreifen der Flüssigkeit von den Schlauchwänden gewährleisten. Wesentlich ist ferner, dass der Molch sich mit flexiblen Dichtlippen selbsttätig an den mehr oder weniger toleranzbehafteten Innendurchmesser des Schlauches anpasst und problemlos auch Unebenheiten und kleine Absätze wie z.B. zwischen dem gemolchten Schlauch und den angeschlossenen Molchstationen überwindet, ohne dass hierbei seine Dichtungsfunktion beeinträchtigt wird (dynamische Dichtung). Besonders wichtig ist eine möglichst hohe Lebensdauer (Standzeit) des Molches, da im Laufe des Betriebes ein gewisser Verschleiß nicht zu vermeiden ist.

Ein aus der EP 1 108 475 bekannter Molch für eine Lackiereinrichtung besteht aus einem starren Grundkörper und daran mit einer Rastverbindung befestigten, die Stirnseiten bildenden Elastomerkörperteilen, die schräg zur Längsrichtung geneigte, in Umfangsrichtung konzentrisch umlaufende Dichtlippen tragen, welche mit konvex gewölbten Enden die Innenseite des Schlauches "abrakeln" sollen. Wenn auf der Schubseite mittels des Schiebemediums ein Überdruck erzeugt wird, so wird hierdurch die jeweilige Dichtlippe unter Vorspannung gegen die Innenwand der Leitung gedrückt, wodurch eine besonders gute Reinigung der Innenwand erreicht werden soll. Dieser bekannte Molch erfüllt die meisten der oben genannten Anforderungen, hat aber den Nachteil, dass er beim Abschleifen der an der Leitungsinnenwand anliegenden gewölbten Enden seiner Dichtlippen relativ bald undicht wird und ausgewechselt werden muss.

Aus der DE 197 33 531 C1 ist ein zum Durchfahren von z.B. 50 km langen Rohrleitungsnetzen bestimmter Molch bekannt, der einen nicht elastischen und nicht nachgiebigen harten Kunststoffkörper als Grundkörper und radial elastisch nachgiebige Ringlippen ebenfalls aus hartem Kunststoff mit überstehenden Abstreifkanten hat. In den Grundkörper ist ein Magnetelement eingebettet. Bei einigen Ausführungsbeispielen befinden sich die Abstreifkanten nahe an den axial äußersten Enden der Ringlippen, während sie bei den anderen Ausführungsbeispielen zwischen zwei angrenzenden axialen Flächenteilen liegen, wobei unter dem axial äußeren oder inneren Flächenteil ein O-Ring bzw. eine Spiralfeder als elastisches Andrückelement angeordnet ist. Bei den erstgenannten Ausführungsbeispielen werden die Abstreifkanten von dem Molchschiebemedium gegen die Leitungsinnenwand gedrückt, so dass sie schnell abgenutzt werden, während die anderen Ausführungsbeispiele wegen der Andrückelemente nicht zur sicheren Beseitigung von Farbresten spülbar und deshalb für Lackieranlagen ungeeignet sind.

Dieses Dokument wird als nächsliegender Stand der Technik gesehen und korrespondiert mit dem Oberbegriff des Anspruchs 1.

Aus der US 5 127 125 ist ein weiterer Molch zum Reinigen von Rohrleitungen bekannt, der von einem Schiebemedium in beiden Richtungen antreibbar sein soll. Zu diesem Zweck besteht der Molch aus einem Grundkörper, an dessen Mantelfläche eine im Wesentlichen radial abstehende Dichtlippe angeordnet ist, die im Betrieb an der Innenwand der Rohrleitung anliegend je nach Bewegungsrichtung axial in die eine oder andere Richtung umklappt, so dass sie von dem Schiebemedium radial gegen die Rohrleitungswand gedrückt wird.

Ziel der Erfindung ist ein für Lackieranlagen geeigneter Molch, der auch bei unvermeidbarem Verschleiß länger funktionsfähig bleibt als bisher.

Diese Aufgabe wird durch die Merkmale des unabhängigen Patentanspruchs gelöst.

Bei dem erfindungsgemäßen Molch werden die Dichtlippen im Laufe der Betriebszeit derart an einer definierten Fläche abgenutzt, dass die an der Innenwand der gemolchten Leitung anliegende Dichtkante ständig selbsttätig nachgeschärft wird und daher auch nach längerem Verschleiß noch die erforderliche Dicht- und Abstreifwirkung gewährleistet. Der axial innere Außenflächenteil der Dichtlippe muss hierfür nicht ganz an der Innenwand der Leitung anliegen. Wenn nur der an die Dichtkante axial nach innen angrenzende Flächenteil der Außenfläche der Dichtlippe unter dem Druck des Molchschiebemediums gleichmäßig abgenutzt wird, bleibt der Winkel zwischen den beiden benachbarten Außenflächenteilen und damit das durch die Schärfe der Dichtkante bestimmte Abstreifverhalten des Molches bis zu einem vorbestimmten Abnutzungsgrad ohne Qualitätseinbußen erhalten. Dies ist ein wesentlicher Vorteil gegenüber den für Beschichtungsanlagen bekannten Molchen, deren Qualität sich während des Betriebes kontinuierlich verschlechtert. Im Vergleich mit den bisher verwendeten Molchen (EP 1 108 475) ergibt sich eine wesentlich erhöhte Standzeit des Molches. Bei praktischen Versuchen wurde beispielsweise festgestellt, dass noch nach mehr als 10.000 Zyklen in einem typischen Leitungsabschnitt einer Beschichtungsanlage die ursprüngliche Dichtkante und die beiden angrenzenden weitgehend ebenen Flächenteile vorhanden waren, wobei sich lediglich der Ort der Dichtkante entsprechend der Abnutzung des gegen die Leitungsinnenwand gedrückten Flächenteils verschoben hatte. Die durch die Winkel zwischen den Flächenteilen vor und hinter der Dichtkante und der Leitungsinnenwand gebildeten, ebenfalls erhalten gebliebenen Fasen sind auch wichtig für das Überfahren von Störkanten der Leitung.

Daneben erfüllt der hier beschriebene Molch alle eingangs erwähnten Anforderungen in einer z.B. elektrostatischen Beschichtungsanlage. U.a. gewährleistet er noch besser als bisher die erforderliche dynamische Dichtung während des Beschichtungsbetriebes durch optimale Anpassung der flexiblen Lippen an den Innendurchmesser der Schläuche und deren Übergangsstellen und das beim Versprühen elektrisch leitfähiger Lacke unter Hochspannung zur Herstellung von Isolierstrecken wichtige vollständige Entleeren von Leitungsabschnitten ohne Hinterlassen von Flüssigkeitsresten an der von dem Molch abgestreiften Leitungsinnenwand. Der Molch ist sowohl bei langsamen wie bei hohen Geschwindigkeiten gleichbleibend dicht. Darüber hinaus sorgt die Form und Ausbildung des hier beschriebenen Molches für im Vergleich mit bekannten Molchen wesentlich bessere Dichtkraft der Dichtlippe unter dem auf die Innenfläche der Dichtlippe wirkenden Druck des Schiebemediums des Molches. Je höher z.B. die Viskosität des zu fördernden Lackes und damit der Schiebedruck sind, um so höher wird die Dichtkraft der Dichtlippe, und zwar in wesentlich stärkerem Maße als bei den bisher verwendeten Molchen.

Für die erforderliche Flexibilität der Dichtlippen, von der maßgeblich die Dichtheit und Verschleißfestigkeit und somit die Betriebssicherheit des Molches abhängen, ist die richtige Wahl der Dicke der Dichtlippe entscheidend, die allerdings je nach dem gewählten Werkstoff unterschiedlich sein kann. Insbesondere bei Herstellung des Molches aus PE (Polyethylen), was sich als zweckmäßig erwiesen hat, soll die Dicke des einem Innenteil des Molches angeformten Teils der Dichtlippe vorzugsweise zwischen 2% und 10% des Außendurchmessers der Dichtkante des Molches in seiner Betriebsposition in der gemolchten Leitung betragen. An der Dichtkante kann die Dichtlippe etwas dicker sein als im Bereich der angrenzenden Flächen, was den Vorteil hat, dass die Dichtkante aufgrund der statischen Vorspannung der Dichtlippe besser an die Innenwand der Leitung angedrückt wird.

Auch die Länge der Dichtlippe trägt zu deren vorteilhaften Eigenschaften bei, u.a. durch Bildung eines ausreichend großen Hebels beim Andrücken an die Leitungsinnenwand durch das Molchschiebemedium. Bei einer zweckmäßigen Ausführungsform beträgt die Länge von der Verbindungsstelle der Dichtlippe mit dem Innenteil des Molches bis zu ihrer Dichtkante mehr als das zweifache ihrer Dicke an der Dichtkante.

Als Material zur Herstellung des Molchs sind neben dem bereits vorstehend erwähnten Polyethylen (PE) theoretisch auch andere Kunststoffe möglich, wie beispielsweise Polytetrafluorethylen (PTFE), Polypropylen (PP), Polyamid (PA), Polyurethan (PUR), Polymethylmethacrylat (PMMA), Polyvinylchlorid (PVC), Polycarbonat (PC), Polyoxymethylen (POM), Polystyrol (PS) oder Kombinationen dieser Materialien.

Vorzugsweise besteht der Molch jedoch aus einem Material, das einen geringen plastischen Verformungsanteil aufweist und somit auch bei dauernder Verformung eine elastische Spannung aufrecht erhält. Dies ist vorteilhaft, da die Dichtwirkung des Molchs dann auch bei längerem Einsatz im verformten Zustand kaum nachläßt.

Darüber hinaus besteht der Molch vorzugsweise aus einem Material, das sowohl eine geringe Reibung als auch ein elastisches Verformungsverhalten aufweist. Die geringe Reibung des Molchmaterials ist vorteilhaft, da der Molch dann mit geringer Kraft durch die zu molchende Leitung bewegt werden kann. Das elstische Verformungsverhalten ist dagegen für eine gute Dichtwirkung vorteilhaft. Der Elastizitätsmodul des Molchmaterials liegt deshalb vorzugsweise im Bereich von 200 N/mm² bis 5000 N/mm², wobei beliebige Zwischenwerte möglich sind.

Gemäß einer bevorzugten Ausführungsform ist ein zwischen dem inneren Außenflächenteil der Dichtlippe und der Stelle ihrer Verbindung mit einem Innenteil des Molches verlaufender Flächenteil der Dichtlippe durch einen Einstich (Hinterschnitt) von einer benachbarten Anschlagfläche des Molches getrennt, gegen die dieser Flächenteil andrückbar ist. Der Einstich soll so schmal wie fertigungstechnisch möglich sein und gewährleistet ein Abstützen der Dichtlippe bei starker Beanspruchung z.B. durch eine Störkante an der gemolchten Leitung ohne die Gefahr von Beschädigungen der Lippe etwa durch Umklappen. Der Einstich gewährleistet auch die erforderliche Materialspannung der Dichtlippe.

Vorzugsweise sind auf beiden Seiten des Molches dessen axiale Position in bezug auf externe Teile der Beschichtungsanlage und/oder andere Molche definierende, über das axiale Ende der Dichtlippen vorspringende Abstandhalterteile vorgesehen. Beispielsweise können dadurch genau definierte Positionen benachbarter Molche in Zu- und Ablaufkanälen von Ventilgehäusen gewährleistet werden. Zugleich werden durch die Abstandhalterteile auch die Dichtlippen vor Beschädigungen beim Auffahren auf andere Molche oder Endanschläge geschützt.

Wenn der Molch gemäß einem anderen zweckmäßigen Merkmal der Erfindung ein Magnetelement enthält, das in Beschichtungsanlagen in an sich bekannter Weise zur Meldung des Erscheinens des Molches an definierten Leitungspositionen oder Ventilstationen od. dgl. genutzt wird, kann das zusätzliche Problem auftreten, dass der Molch die Meldestelle mit der richtigen Polung des Magnetelements erreichen muss. Wenn der Molch mit der verkehrten Seite in das Leitungssystem eingesetzt wird, können sich falsche Meldesignale ergeben. Darüber hinaus sollen die einzelnen Molche so in die zu molchende Leitung eingesetzt werden, dass sich benachbarte Molche abtoßen, damit die benachbarten Molche in einer Molchstation voneinander getrennt werden können. In die beiden Seiten bisher verwendeter Molche sind deshalb die Symbole "N" und "S" eingeprägt, die aber so unauffällig sind, dass sie oft übersehen oder verwechselt werden.

Dieses Problem wird erfindungsgemäß dadurch gelöst, dass auf axial entgegengesetzten Seiten des Molches Farbmarkierungen mit voneinander verschiedenen Farben zur Kennzeichnung der Magnetpole vorgesehen sind. Beispielsweise kann der Molch aus zwei gleichen, axial miteinander verbundenen Teilen hergestellt werden, die aus verschiedenfarbig eingefärbten Werkstoff bestehen.

In einer anderen Ausführungsform weist der Molch dagegen eine mindestens teilweise transparente Hülle auf, in die ein farblich gekennzeichnetes Magnetelement eingesetzt ist. Beispielsweise kann die Hülle aus einem durchsichtigen Kunststoff bestehen, während die beiden Pole des Magnetelements unterschiedlich eingefärbt oder beschichtet sind. Das Bedienungspersonal kann dann durch die Hülle hindurch die Orientierung des Molchs anhand der Farbgestaltung des Magnetelements erkennen.

Anstelle eines Magnetelements kann der Molch zur Signalgebung auch ein magnetisierbares Eisenelement enthalte, das vorzugsweise aus einem weichmagnetischen Material besteht und von einem außerhalb der zu molchenden Leitung befindlichen Magneten magnetisiert werden kann.

Ferner kann in dem Molch zur Signalgebung auch ein dielektrisches Element angeordnet werden, wobei ein außerhalb der zu molchenden Leitung befindlicher Sensor die dielektrischen Eigenschaften innerhalb der Leitung erfasst und dadurch den Molch erkennen kann.

Für die Herstellung des Molches ist es besonders einfach und vorteilhaft, die Konturen des Molchkörpers und der Dichtlippen durch Drehen zu erzeugen. Es ist aber auch denkbar, die Konturen durch andere bekannte Herstellungsverfahren zu erzeugen. U.a. aus fertigungstechnischen Gründen bei der Formgebung der Dichtlippen, die annähernd parallel zu der Längsachse des Molches liegende Teile haben sollen, werden die Dichtlippen vorzugsweise zunächst so hergestellt, dass sie zu einem großen Teil senkrecht zu der Längsachse stehen. Die gewünschte Endform kann dann durch Umformung mit einem geeigneten Werkzeug und anschließende Erwärmung erreicht werden. Hierbei kann in für die Eigenschaften der Dichtlippe sehr vorteilhafter Weise gezielt und wesentlich besser als bisher das bei Polymeren bekannte Memory-Verhalten des verwendeten Werkstoffs beeinflusst werden.

Die Erwärmung der Dichtlippen kann direkt in einer Transporthülse erfolgen, in der der Molch anschließend bis zur Verwendung am Einsatzort aufbewahrt werden kann, wobei die Dichtlippen ständig auf ihrem vorbestimmten Durchmessermaß gehalten werden. Die Transporthülse kann dann auch direkt zum Einsetzen des Molches in das Leitungssystem benutzt werden.

An dem in der Zeichnung dargestelltem Ausführungsbeispiel wird die Erfindung näher erläutert. Es zeigen
- Fig. 1: einen vergrößerten maßstabsgenauen Längsschnitt längs der Achse des Molches, dessen Dichtlippen in zwei verschiedenen Positionen dargestellt sind;
- Fig. 2: eine stark vergrößerte Teilschnittansicht einer der Dichtlippen des Molches gemäß Fig. 1 in der Betriebsposition innerhalb der gemolchten Leitung; und
- Fig. 3: einen Längsschnitt längs der Achse einer Transporthülse für den Molch nach Fig. 1 in kleinerem Maßstab.

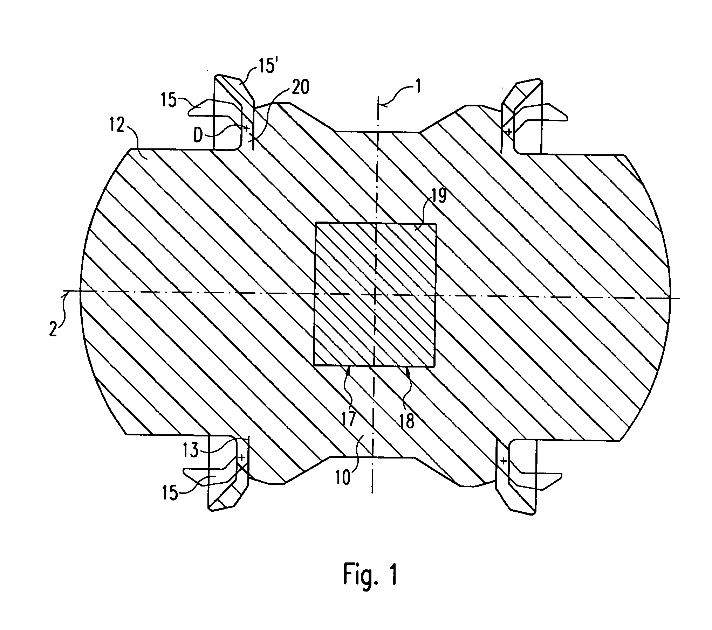

Der in Fig. 1 dargestellte Molch besteht aus zwei bezüglich der bei 1 angedeuteten radialen Mittelebene axial spiegelbildlich gleichen, zu der Längsachse 2 rotationssymmetrischen Hälften. Jede Hälfte besteht aus einem zylindrischen Innenteil 10, der axial nach außen in einen radial erweiterten Anschlagteil 11 der dargestellten Form übergeht, an den sich ein zylindrischer Abstandhalterteil 12 anschließt, der einen kleineren Durchmesser haben kann als der Anschlagteil 11 und axial darstellungsgemäß in einer konvex gewölbten Stirnfläche endet. Diese Stirnfläche könnte auch eben sein.

Der Anschlagteil 11 bildet an seinem axial und radial äußeren Ende senkrecht zu der Längsachse 2 eine durch einen Hinterschnitt oder Einstich in den Molchkörper erzeugte ringförmige ebene Stirnfläche 13, die sich beispielsweise bis etwa zu dem Durchmesser des Abstandhalterteils 12 erstreckt. Der Außendurchmesser des Anschlagteils 11 soll an der Stirnfläche 13 zum Schutz der nachfolgend beschriebenen Dichtlippe nur geringfügig kleiner sein als der Innendurchmesser der gemolchten Leitung.

Axial nach außen an die Stirnfläche 13 angrenzend ist dem Molchkörper die Dichtlippe 15 angeformt. Die Verbindungsebene, also der Übergang zwischen dem inneren Ende der Dichtlippe und dem Hauptkörper des Molches verläuft darstellungsgemäß achsparallel zwischen dem zylindrischen Umfang des Abstandhalterteils 12 und dem kreisförmigen Ende des die Stirnfläche 13 bildenden Einstichs. Die Dichtlippe ist in zwei verschiedenen Stellungen dargestellt, nämlich bei 15 in der Position, die sie einnimmt, wenn der Molch in die gemolchte Leitung eingesetzt ist, und bei 15' in einer Stellung, die sie ursprünglich einmal bei der (weiter unten erläuterten) Herstellung des Molches hatte.

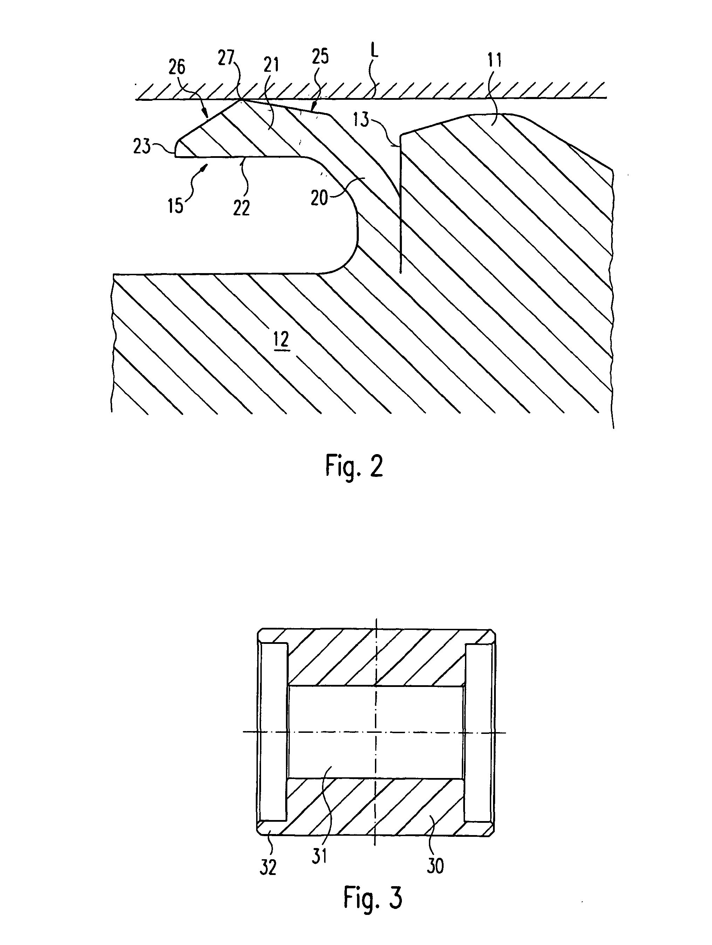

Der Verlauf des inneren Teils der in die bei 15 dargestellte Position gebogenen Dichtlippe ist nur schematisch dargestellt und muss nicht genau der sich tatsächlich ergebenden Form entsprechen. Davon abgesehen ist die Kontur der Dichtlippe aber in Fig. 1 und in der vergrößerten Detailansicht der Fig. 2 maßstabsgenau wiedergegeben, und zwar in der Position, die sich ergibt, wenn sich der Molch ohne Belastung durch sein Schiebemedium in der gemolchten Leitung befindet und nur mit der elastizitätsbedingten statischen Vorspannung an deren Innenwand anliegt. Demgemäß schließt sich an die achsparallele Übergangsebene zum Molchkörper zunächst ein radial nach außen verlaufender, in die dargestellte Position gebogener scheiben- bzw. tellerförmiger Ringabschnitt 20 mit gleichbleibender Dicke an (in Fig. 1 auch im ungebogenen Zustand erkennbar). Der Ringabschnitt 20 geht in einen axial nach außen bzw. darstellungsgemäß radial nach innen abgewinkelten zweiten flachen Ringabschnitt 21 über, dessen radial nach innen weisende Fläche 22 geradlinig und mindestens bei unbelastetem Molch wenigstens annähernd parallel zu der Längsachse 2 bis zu dem äußersten Ende 23 der Dichtlippe 15 verläuft. Die der als geradlinig angenommenen Innenwand L der gemolchten Leitung zugewandte Außenfläche des Ringabschnitts 21 hat dagegen zwei darstellungsgemäß gegeneinander um beispielsweise etwa 130° abgewinkelte ebene Flächenteile 25 bzw. 26, die zwischen sich die Dichtkante 27 der Dichtlippe bilden. Die Dicke des Ringabschnitts 21 nimmt also von dem ersten Ringabschnitt 20 aus bis zu der Dichtkante 27 stetig zu und wird von dort aus bis zu dem Ende 23 stetig geringer. Bei dem dargestellten Beispiel verjüngt sich die Dichtlippe also stetig bis zu ihrer dünnsten Stelle an ihrem äußersten Ende. Die Dicke der Dichtlippe wird zweckdienlich in Abhängigkeit von dem verwendeten Werkstoff gewählt und beträgt im Bereich des Ringabschnitts 20 bei dem dargestellten Beispiel etwa 1/32 des Innendurchmessers der Innenwand L, an der die Dichtlippe 15 anliegt.

Durch die Winkel vor und hinter der Dichtkante 27 zwischen der Innenwand L der Leitung und dem axial äußeren Flächenteil 26 bzw. dem inneren Flächenteil 25 und insbesondere auch der angrenzenden Fläche des Ringabschnitts 20 werden die u.a. für das problemlose Überfahren eventueller Störkanten in oder an der Leitung wichtigen Fasen der Dichtlippe 15 gebildet. Wesentlich ist aber darüber hinaus die Lage der Flächenteile 25 und 26 für die durch die Erfindung erhaltene selbständig nachschärfende Dichtlippenkante. In der dargestellten Position ohne Belastung durch das Schiebemedium soll der Winkel zwischen der Innenwand L der gemolchten Leitung und dem Flächenteil 25 mehr als z.B. 5°, aber weniger als etwa 20° betragen; bei dem dargestellten Beispiel beträgt er ungefähr 10°. Der die axial äußere Fase bildende Winkel zwischen dem Flächenteil 26 und der Innenwand L kann darstellungsgemäß größer sein, hier etwas mehr als 30°.

Wenn der Molch dagegen durch das Schiebemedium angetrieben wird, wirkt dessen Druck gleichmäßig auf die gesamte Innenfläche vom Umfang des Abstandhalterteils 12 über die angrenzende Fläche des ersten Ringabschnitts 20 und die Fläche 22 des zweiten Ringabschnitts 21 bis zu dem Ende 23. Aufgrund der dargestellten Form der Dichtlippe 15 bewirkt diese Druckverteilung, dass die Druckkraft des Schiebemediums hauptsächlich axial hinter der Dichtkante 27 wirkt und daher den Flächenteil 25 wenigstens annähernd parallel zur Längsachse 2 ausrichtet und gegen die Innenwand L drückt, so dass ungeachtet eines dadurch verursachten Verschleißes dieser Fläche die Dichtkante 27 als solche erhalten bleibt.

Bei praktischen Ausführungsformen des dargestellten Molches mit einem Nenndurchmesser der Dichtlippe von 16 mm zur Verwendung in typischen Schlauchleitungen einer Beschichtungsanlage für die Serienbeschichtung von Werkstücken kann die Dicke der Dichtlippe 15 im Bereich des Ringabschnitts 20 zweckmäßig 0,5 mm betragen. Bei einem ähnlichen Molch für denselben Zweck mit einem Nenndurchmesser von 9 mm kann die entsprechende Dicke 0,4 mm betragen. Sonstige Maße können hiervon ausgehend aus der Zeichnung ermittelt werden.

Zur Herstellung des dargestellten Molches werden beispielsweise durch Drehen zunächst zwei zylindrische Rohlinge aus elastischem Kunststoff wie beispielsweise PE mit zweckdienlich bemessenem Außendurchmesser erzeugt.

In einander zugewandten Stirnflächen der beiden Rohlinge werden zu der Längsachse koaxiale zylindrische Ausnehmungen 17 bzw. 18 (Fig. 1) gebildet. Nachdem in eine der Ausnehmungen das ebenfalls in Fig. 1 dargestellte zylindrische Magnetelement 19 eingesetzt worden ist, werden die beiden Rohlinge fest miteinander verbunden, beispielsweise durch Verschweißen oder Kleben.

Vorzugsweise danach und durch erneute Drehbearbeitung wird die Kontur des Molchkörpers und der Dichtlippen in die in Fig. 1 dargestellte Form gebracht, wobei die Dichtlippen die bei 15' gezeigte Form und Stellung erhalten. Gleichzeitig oder danach wird der die Stirnfläche 13 bildende Einstich oder Einschnitt in den Magnetkörper durchgeführt.

Sodann wird der insoweit fertige Molch in einen zylindrischen Innenraum eines Umformwerkzeugs eingesetzt, der einen Durchmesser gleich dem Nenndurchmesser des Molches bzw. dem Innendurchmesser der zu molchenden Leitung hat und länger ist als der sich hierbei ergebende axiale Abstand der axial äußersten Enden der beiden Dichtlippen des Molches. Die Dichtlippen werden hierbei aus der bei 15' dargestellten Lage um einen gedachten Drehpunkt (bzw. um den dortigen koaxialen Kreis) D in die bei 15 dargestellte Position geschwenkt. In dem Werkzeug wird der Molch so erhitzt, dass die Dichtlippen unter gezielter Beeinflussung des Memory-Verhaltens des verwendeten Kunststoffs in ihre endgültige Form umgeformt werden, in der sie zwar radial von dem Molchkörper etwas weiter abstehen als in der bei 15 dargestellten Position, wenn der Molch sich außerhalb der gemolchten Leitung befindet, aber auch dann in eine Form mit einem Außendurchmesser gebogen sind, der kleiner ist als bei 15' dargestellt ist. In dem Umformwerkzeug hat der Molch dieselbe Form und Lage der Dichtlippen wie in Fig. 2.

Zur Einstellung der richtigen Magnetfeldstärke des Magnetelements 19 kann der Molch einer Nachmagnetisierung unterzogen werden.

Gemäß einem eingangs schon erwähnten besonderem Merkmal der Erfindung sollen auf axial entgegengesetzten Seiten des Molches Farbmarkierungen mit voneinander verschiedenen Farben zur Kennzeichnung der Magnetpole des Magnetelements 19 vorgesehen sein. Zu diesem Zweck wird bei der beschriebenen Herstellung des Molchs für die beiden spiegelbildlich gleichen Hälften ein mit jeweils einer anderen Farbe eingefärbter Werkstoff verwendet (z.B. kann die eine Molchhälfte blau und die andere Molchhälfte rot eingefärbt sein).

Es ist jedoch alternativ auch möglich, dass das Magnetelement 19 zweifarbig ist, während der Molch aus einem transparenten Material besteht, damit das Bedienungspersonal die Orientierung des Molchs sofort erkennen kann.

Zum Transportieren und Einsetzen des Molchs kann zweckmäßig die in Fig. 3 dargestellte Transporthülse 30 verwendet werden, in der der Molch bis zu seiner Verwendung aufbewahrt und zu seinem Einsatzort transportiert wird. Dadurch wird der Molch dauerhaft geschützt und insbesondere vor Veränderungen seiner Dichtlippen bewahrt. Die Länge des den Molch aufnehmenden zylindrischen Innenraums 31 ist bei dem dargestellten Beispiel größer als die axiale Gesamtlänge des Molches. Besonders zweckmäßig ist es, wenn der Molch aus der Tränsporthülse 30 direkt in das zu molchende Leitungssystem eingesetzt wird. Zu diesem Zweck weist die Transporthülse 30 auf beiden Seiten axial mit dem Hülsenumfang fluchtend vorspringende Ringelemente 32 auf, mit denen die Transporthülse mit einem (nicht dargestellten) Anschlussbauteil des Leitungssystems ausgerichtet werden kann, in das der Molch aus der Transporthülse hineingeschoben wird.

## Patentansprüche

1. Molch, der zur Förderung eines Beschichtungsmaterials durch eine Leitung einer Anlage für die Serienbeschichtung von Werkstücken von einem Schiebemedium antreibbar ist,
mit zwei längs einer axialen Längsachse (2) des Molches voneinander beabstandeten, zu der Längsachse koaxialen flexiblen Dichtlippen (15),
die radial über den zwischen ihnen liegenden Molchteil (10, 11) vorspringen und mit einer radial nach außen weisenden, kreisförmig koaxial zu der Längsachse umlaufenden Außenfläche aus einer Ruheposition, in die sie sich außerhalb der gemolchten Leitung einstellen, radial nach innen in eine Betriebsposition innerhalb einer gemolchten Leitung biegbar sind,
**dadurch gekennzeichnet, dass** die Dichtlippe (15) an ihrer Außenfläche an dem in der Betriebsposition radial äußersten Ende eine Dichtkante (27) hat, an die sich axial auf beiden Seiten wenigstens annähernd ebene Flächenteile (25, 26) anschließen,
und dass der Molch und die Dichtlippe (15) so geformt und ausgebildet sind, dass ihr axial in Richtung zu der jeweils anderen Dichtlippe verlaufender innerer Außenflächenteil (25) durch das Schiebemedium des Molches in der Betriebsposition in eine Lage bringbar ist, in der er wenigstens annähernd parallel zu der Längsachse (2) des Molches liegt.

2. Molch nach Anspruch 1, **dadurch gekennzeichnet, dass** sich die zu der Dichtkante (27) radial entgegengesetzte Innenfläche (22) der Dichtlippe (15) entlang des axial inneren Außenflächenteils (25) axial so weit nach innen erstreckt und die Dichtlippe so geformt und ausgebildet ist, dass in der Betriebsposition der axial innere Außenflächenteil (25) von dem Schiebemedium des Molches an die Innenwand (L) der gemolchten Leitung andrückbar ist.

3. Molch nach Anspruch 1 oder 2, **dadurch gekennzeichnet, dass** der axial innere Außenflächenteil (25) der Dichtlippe (15) mit der Längsachse (2) des Molches einen Winkel von weniger als etwa 20° bildet, wenn sich der Molch ohne Belastung durch das Schiebemedium in der gemolchten Leitung befindet.

4. Molch nach einem der vorangehenden Ansprüche, **dadurch gekennzeichnet, dass** die beiden Außenflächenteile (25, 26) der Dichtlippe (15) an der Dichtkante (27)einen Winkel in der Größenordnung von 130° einschließen.

5. Molch nach einem der vorangehenden Ansprüche, **dadurch gekennzeichnet, dass** in der Betriebsposition die zu der Dichtkante (27) radial entgegengesetzte Innenfläche (22) der Dichtlippe (15) wenigstens annähernd parallel zu der Längsachse (2) des Molches liegt.

6. Molch nach einem der vorangehenden Ansprüche, **dadurch gekennzeichnet, dass** die Dichtlippe (15) auf beiden Seiten der Dichtkante (27) dünner wird.

7. Molch nach einem der vorangehenden Ansprüche, **dadurch gekennzeichnet, dass** die in der Betriebsposition gebogene Länge der einem Innenteil (10, 11) des Molches angeformten Dichtlippe (15) zwischen der Dichtkante (27) und der Verbindungsstelle mit dem Innenteil des Molches wesentlich länger ist als ihre Dicke an der Dichtkante (27).

8. Molch nach Anspruch 7, **dadurch gekennzeichnet, dass** die Länge mehr als das zweifache der Dicke an der Dichtkante (27) beträgt.

9. Molch nach einem der vorangehenden Ansprüche, **dadurch gekennzeichnet, dass** die Dicke des einem Innenteil (10, 11) des Molches angeformten Teils (20) der Dichtlippe (15) zwischen 2% und 10% des Außendurchmessers der Dichtkante (27) des Molches in seiner Betriebsposition in der gemolchten Leitung beträgt.

10. Molch nach einem der vorangehenden Ansprüche, **dadurch gekennzeichnet, dass** ein zwischen dem axial inneren Außenflächenteil (25) der Dichtlippe (15) und der Stelle ihrer Verbindung mit einem Innenteil (10, 11) des Molches verlaufender Flächenteil der Dichtlippe (15) durch einen Einstich von einer benachbarten Anschlagfläche (13) des Molches getrennt ist, gegen die dieser Flächenteil andrückbar ist.

11. Molch nach Anspruch 10, **dadurch gekennzeichnet, dass** die Anschlagfläche wenigstens annähernd senkrecht zu der Längsachse (2) des Molches verläuft.

12. Molch nach einem der vorangehenden Ansprüche, **dadurch gekennzeichnet, dass** die Dichtlippe (15) zwei gegeneinander abgewinkelte ringförmige Abschnitte (20, 21) hat, wobei der axial und radial äußere Abschnitt (21) die Dichtkante (27) bildet, während der innere Abschnitt (20) mit einem Innenteil (10, 11) des Molches verbunden ist.

13. Molch nach einem der vorangehenden Ansprüche, **dadurch gekennzeichnet, dass** die axiale Position des Molches in Bezug auf externe Teile der Anlage und/oder andere Molche definierende, über das axiale Ende der Dichtlippen (15) vorspringende Abstandhalterteile (12) vorgesehen sind.

14. Molch nach einem der vorangehenden Ansprüche, **dadurch gekennzeichnet, dass** er ein Magnetelement (19) oder ein magnetisierbares Eisenelement enthält.

15. Molch nach Anspruch 14, **dadurch gekennzeichnet, dass** das Magnetelement (19) zwischen zwei getrennten, aber fest miteinander verbundenen Teilen des Molches angeordnet ist.

16. Molch nach einem der vorangehenden Ansprüche mit einem im Inneren des Molches angeordneten Magnetelement (19), dessen Pole axial voneinander beabstandet sind,
**dadurch gekennzeichnet, dass** auf axial entgegengesetzten Seiten des Molches Farbmarkierungen mit voneinander verschiedenen Farben zur Kennzeichnung der Magnetpole vorgesehen sind.

17. Molch nach Anspruch 14 und/oder Anspruch 15, **dadurch gekennzeichnet, dass** das Magnetelement oder das Eisenelement in einer mindestens teilweise durchsichtigen Umhüllung angeordnet ist und auf axial entgegengesetzten Seiten unterschiedliche Farbmarkierungen aufweist, die durch die Umhüllung sichtbar sind.

18. Verfahren zum Herstellen eines Molches nach einem der vorhergehenden Ansprüche,
bei dem aus einem elastischen Kunststoff ein Rotationssymmetrischer Körper mit zwei ihm angeformten, längs seiner Achse voneinander beabstandeten koaxialen und radial über den zwischen ihnen liegenden Teil des Körpers vorspringenden flexiblen Dichtlippen (15') gebildet wird,
**dadurch gekennzeichnet, dass** die Kontur des Molchkörpers und der Dichtlippen (15') durch Drehen erzeugt wird.

19. Verfahren nach Anspruch 18, **dadurch gekennzeichnet, dass** die Dichtlippen (15') nach der Erzeugung der Kontur des Molches und der Dichtlippen eine Umformung erfahren, durch die ihr Außendurchmesser in der Ruheposition des Molches außerhalb der gemolchten Leitung kleiner ist als nach der Erzeugung der Kontur.

20. Verfahren nach Anspruch 18, **dadurch gekennzeichnet, dass** der Molchkörper nach dem Drehen zur Umformung der Dichtlippen (15') in eine Hülse (30) eingesetzt wird, deren zylindrischer Innendurchmesser kleiner ist als der Außendurchmesser der Dichtlippen (15') vor dem Einsetzen und dem Außendurchmesser der Dichtlippen (15) in der Betriebsposition des Molches in der gemolchten Leitung entspricht.

21. Verfahren nach Anspruch 20, **dadurch gekennzeichnet, dass** der Molchkörper zur Umformung der Dichtlippen (15') in der Hülse (30) erhitzt wird.

22. Verfahren nach einem der Ansprüche 18 bis 21, **dadurch gekennzeichnet, dass**
zwei zylindrische Rohlingshälften gedreht werden,
in eine der Rohlingshälften ein Magnetkörper (19) eingelegt wird
und die beiden Rohlingshälften anschließend miteinander verklebt, verschweißt oder auf andere Weise fest miteinander verbunden werden.

23. Verfahren nach Anspruch 22, **dadurch gekennzeichnet, dass** die Kontur des Molches und der Dichtlippen (15') durch Drehen nach dem Verbinden der Rohlingshälften erzeugt wird.

24. Verfahren zum Herstellen eines Molches nach einem der Ansprüche 20 bis 23 und zu seiner Handhabung, **dadurch gekennzeichnet, dass** der fertige Molch in der Hülse (30) aufbewahrt und zu seinem Einsatzort transportiert wird.

25. Hülse für das Verfahren nach einem der Ansprüche 20 - 24, **dadurch gekennzeichnet, dass** ihr zylindrischer Innenraum (31) einen Durchmesser hat, der wenigstens annähernd gleich dem Innendurchmesser der Leitung ist, in die der Molch eingesetzt werden soll, und eine Länge, die größer ist als der axiale Abstand der axial äußersten Enden der beiden Dichtlippen (15) des eingesetzten Molches, und dass axial angrenzend an den zylindrischen Innenraum koaxial auf einer oder beiden Seiten der Hülse (30) ein Ringelement (32) vorspringt, mit dem die Hülse zum Einsetzen des Molches in ein mit der Leitung verbundenes Bauteil mit diesem Bauteil ausrichtbar ist.

## Claims

1. Pig which can be driven by a pushing medium for conveying a coating material through a line of an installation for the serial coating of workpieces, with two flexible sealing lips (15) which are separated from one another along an axial longitudinal axis (2) of the pig and are coaxial to the longitudinal axis, and which project radially over the pig part (10, 11) lying between them and which with a circular external surface coaxial to the longitudinal axis directed radially outwards can bend out of a rest position; in which the sealing lips are set outside the pigged line, radially inwards into an operating position within a pigged line, **characterised in that** the sealing lip (15) has on its external surface at the end which is radially outermost in the operating position a sealing edge (27) which is adjoined axially on both sides by substantially flat surface parts (25, 26), and that the pig and the sealing lip (15) are shaped and constructed so that in the operating position the inner external surface part which extends axially in the direction of the respective other sealing lip can be brought by the pushing medium of the pig into a position in which it lies at least substantially parallel to the longitudinal axis (2) of the pig.

2. Pig as claimed in Claim 1, **characterised in that** the internal surface (22) of the sealing lip (15) which is radially opposite the sealing edge (27) extends inwards axially along the axially inner external surface part (25) by such a distance and the sealing lip is shaped and constructed in such a way that in the operating position the axially inner external surface part (25) can be pressed onto the internal wall (L) of the pigged line by the pushing medium of the pig.

3. Pig as claimed in Claim 1 or 2, **characterised in that** the axially inner external surface part (25) of the sealing lip (15) forms an angle of less than approximately 20° with the longitudinal axis (2) of the pig when the pig is located in the pigged line without loading by the pushing medium.

4. Pig as claimed in any one of the preceding claims, **characterised in that** the two external surface parts (25, 26) of the sealing lip (15) enclose an angle of the order of magnitude of 130° on the sealing edge (27).

5. Pig as claimed in any one of the preceding claims, **characterised in that** in the operating position the internal surface (22) of the sealing lip (15) which is radially opposite the sealing edge (27) includes an inner surface (22) is at least substantially parallel to the longitudinal axis (2) of the pig.

6. Pig as claimed in any one of the preceding claims, **characterised in that** the sealing lip (15) becomes thinner on both sides of the sealing edge (27).

7. Pig as claimed in any one of the preceding claims, **characterised in that** the length of the sealing lip (15) formed on an internal part (10, 11) of the pig between the sealing edge (17) and the connection point with the internal part of the pig, which length is bent in the operating position, is substantially greater than the thickness thereof on the sealing edge (27).

8. Pig as claimed in Claim 7, **characterised in that** the length is more than twice the thickness on the sealing edge (27).

9. Pig as claimed in any one of the preceding claims, **characterised in that** the thickness of the part (20) of the sealing lip (15) formed on an internal part (10, 11) of the pig is between 2% and 10% of the external diameter of the sealing edge (27) of the pig in its operating position in the pigged line.

10. Pig as claimed in any one of the preceding claims, **characterised in that** a surface part of the sealing lip (15) extending between the axially inner external surface part (25) of the sealing lip (15) and the location of its connection to an internal part (10, 11) of the pig is separated by a cut from an adjacent contact surface (13) of the pig against which this surface part can be pressed.

11. Pig as claimed in Claim 10, **characterised in that** the contact surface extends at least substantially perpendicular to the longitudinal axis (2) of the pig.

12. Pig as claimed in any one of the preceding claims, **characterised in that** the sealing lip (15) has two annular portions (20, 21) which are angled against one another, wherein the axially and radially outer portion (21) forms the sealing edge (27) whilst the inner portion (20) is connected to an internal part (10, 11) of the pig.

13. Pig as claimed in any one of the preceding claims, **characterised in that** spacer parts (12) are provided which project over the axial end of the sealing lips (15) and define the axial position of the pig relative to external parts of the installation and/or other pigs.

14. Pig as claimed in any one of the preceding claims, **characterised in that** it contains a magnetic element (19) or a magnetisable iron element.

15. Pig as claimed in Claim 14, **characterised in that** the magnetic element (19) is disposed between two parts of the pig which are separate but firmly connected to one another.

16. Pig as claimed in any one of the preceding claims with a magnetic element (19) disposed in the interior of the pig, the poles of the magnetic element being axially spaced from one another, **characterised in that** colour markings are provided on axially opposing sides of the pig with different colours for the identification of the magnetic poles.

17. Pig as claimed in Claim 14 and/or Claim 15, **characterised in that** the magnetic element or the iron element is disposed in a sleeve which is at least partially transparent and has on axially opposing sides different colour markings which are visible through the sleeve.

18. Method for the production of a pig as claimed in any one of the preceding claims, in which a rotationally symmetrical body with two flexible sealing lips (15') which are formed thereon, are coaxial spaced from one another along the axis thereof and project radially over the part of the body lying between them, is formed from a resilient plastics material, **characterised in that** the contour of the pig body and of the sealing lips (15') is produced by turning.

19. Method as claimed in Claim 18, **characterised in that**, after the production of the contour of the pig and of the sealing lips, the sealing lips (15') undergo a shaping by which their external diameter in the rest position of the pig outside the pigged line is smaller than after the production of the contour.

20. Method as claimed in Claim 18, **characterised in that**, after the turning for shaping of the sealing lips (15'), the pig body is inserted into a sleeve (30), the cylindrical internal diameter of which is smaller than the external diameter of the sealing lips (15') before the insertion and corresponds to the external diameter of the sealing lips (15) in the operating position of the pig in the pigged line.

21. Method as claimed in Claim 20, **characterised in that** the pig body is heated in the sleeve for shaping of the sealing lips (15').

22. Method as claimed in any one of Claims 18 to 21, **characterised in that** two cylindrical half-blanks are turned, a magnetic body (19) is inlaid into one of the half-blanks, and the two half-blanks are then glued or welded to one another or firmly connected to one another in some other way.

23. Method as claimed in Claim 22, **characterised in that** the contour of the pig and of the sealing lips (15') is produced by turning after the connection of the half-blanks.

24. Method for the production of a pig as claimed in any one of Claims 20 to 23 and for handling thereof, **characterised in that** the finished pig is kept in the sleeve (30) and is transported to its place of use.

25. Sleeve for the method as claimed in any one of Claims 20 to 24, **characterised in that** the cylindrical interior (31) thereof has a diameter which is at least substantially equal to the internal diameter of the line into which the pig is to be inserted and a length which is greater than the axial distance between the axially outermost ends of the two sealing lips (15) of the inserted pig, and that axially adjacent to the cylindrical interior a ring element (32) projects coaxially on one or both sides of the sleeve (30), and for insertion of the pig into a component connected to the line the sleeve can be aligned with this component by the ring element.

## Revendications

1. Racleur pouvant être entraîné par un fluide actionneur pour le transport d'un matériau de revêtement dans une conduite d'une installation pour le revêtement en série de pièces, avec deux lèvres d'étanchéité souples (15) espacées entre elles le long d'un axe longitudinal axial (2) du racleur et disposées en position coaxiale par rapport à l'axe longitudinal, qui sont en dépassement dans le sens radial par-dessus la partie de racleur (10, 11) se trouvant entre elles et qui, avec une surface extérieure dirigée dans le sens radial vers l'extérieur et s'étendant en forme de cercle dans le sens coaxial par rapport à l'axe longitudinal, peuvent être coudées dans le sens radial vers l'intérieur depuis une position de repos, dans laquelle elle se placent en dehors de la conduire raclée, jusque dans une position de fonctionnement à l'intérieur d'une conduire raclée, **caractérisé en ce que** la lèvre d'étanchéité (15) comprend à sa surface extérieure, à l'extrémité qui, dans la position de fonctionnement, est située le plus à l'extérieur dans le sens radial, une arête d'étanchéité (27) qui est suivie dans le sens axial sur les deux côtés de parties de surfaces (25, 26) au moins approximativement planes, et **en ce que** le racleur et la lèvre d'étanchéité (15) sont formés et configurés de telle façon que leur partie intérieure de surface extérieure (25) s'étendant dans le sens axial en direction de l'autre lèvre d'étanchéité respective peut, dans la position de fonctionnement, être amenée par le fluide actionneur du racleur dans une position dans laquelle elle est placée au moins approximativement parallèlement à l'axe longitudinal (2) du racleur (1).

2. Racleur selon la revendication 1, **caractérisé en ce que** la surface intérieure (22) de la lèvre d'étanchéité (15), qui est opposée dans le sens radial à l'arête d'étanchéité (27), s'étend suffisamment loin vers l'intérieur dans le sens axial le long de la partie de surface extérieure (25) située à l'intérieur dans le sens axial et la lèvre d'étanchéité est formée et configurée de telle façon que, dans la position de fonctionnement, la partie de surface extérieure (25) située à l'intérieur dans le sens axial puisse être poussée par le fluide actionneur du racleur contre la paroi intérieure L de la conduire raclée.

3. Racleur selon la revendication 1 ou 2, **caractérisé en ce que** la partie de surface extérieure (25) de la lèvre d'étanchéité (15) située à l'intérieur dans le sens axial forme avec l'axe longitudinal (2) du racleur un angle inférieur à environ 20° lorsque le racleur se trouve dans la conduire raclée sans être mis en contrainte par le fluide actionneur.

4. Racleur selon l'une quelconque des revendications précédentes, **caractérisé en ce que** les deux parties de surfaces extérieures (25, 26) de la lèvre d'étanchéité (15) forment au niveau de l'arête d'étanchéité (27) un angle de l'ordre de grandeur de 130°.

5. Racleur selon l'une quelconque des revendications précédentes, **caractérisé en ce que**, dans la position de fonctionnement, la surface intérieure (22) de la lèvre d'étanchéité (15) qui est opposée dans le sens radial à l'arête d'étanchéité (27) s'étend au moins approximativement parallèlement à l'axe longitudinal (2) du racleur.

6. Racleur selon l'une quelconque des revendications précédentes, **caractérisé en ce que** la lèvre d'étanchéité (15) devient plus mince sur les deux côtés de l'arête d'étanchéité (27).

7. Racleur selon l'une quelconque des revendications précédentes, **caractérisé en ce que** la longueur coudée en position de fonctionnement de la lèvre d'étanchéité (15) intégrée dans la forme d'une partie intérieure (10, 11) du racleur est nettement plus importante entre l'arête d'étanchéité (27) et le point de raccordement avec la partie intérieure du racleur que son épaisseur au niveau de l'arête d'étanchéité (27).

8. Racleur selon la revendication 7, **caractérisé en ce que** la longueur est égale à plus du double de l'épaisseur au niveau de l'arête d'étanchéité (27).

9. Racleur selon l'une quelconque des revendications précédentes, **caractérisé en ce que** l'épaisseur de la partie (20) de la lèvre d'étanchéité (15) intégrée dans la forme d'une partie intérieure (10, 11) du racleur représente de 2% à 10% du diamètre extérieur de l'arête d'étanchéité (27) du racleur lorsqu'il se trouve dans sa position de fonctionnement dans la conduire raclée.

10. Racleur selon l'une quelconque des revendications précédentes, **caractérisé en ce qu'**une partie de surface de la lèvre d'étanchéité (15) s'étendant entre la partie de surface extérieure (25) de la lèvre d'étanchéité (15) située à l'intérieur dans le sens axial et le point de sa liaison avec une partie intérieure (10, 11) du racleur est séparée par une entaille pratiquée dans une surface de fixation voisine (13) du racleur contre laquelle cette partie de surface peut être appuyée.

11. Racleur selon la revendication 10, **caractérisé en ce que** la surface d'appui s'étend au moins approximativement perpendiculairement à l'axe longitudinal (2) du racleur.

12. Racleur selon l'une quelconque des revendications précédentes, **caractérisé en ce que** la lèvre d'étanchéité (15) comprend deux sections de forme circulaire (20, 21) formant un angle entre elles, alors que la section extérieure dans le sens axial et dans le sens radial (21) forme l'arête d'étanchéité (27) tandis que la section intérieure (20) est reliée avec une partie intérieure (10, 11) du racleur.

13. Racleur selon l'une quelconque des revendications précédentes, **caractérisé en ce que** la position axiale du racleur est prévue en fonction de pièces d'espacement (12) s'avançant au-delà de l'extrémité axiale des lèvres d'étanchéité (15) et définissant des pièces externes de l'installation et/ou d'autres racleurs.

14. Racleur selon l'une quelconque des revendications précédentes,
**caractérisé en ce qu'**il comprend un élément magnétique (19) ou un élément en fer pouvant être magnétisé.

15. Racleur selon la revendication 14, **caractérisé en ce que** l'élément magnétique (19) est disposé entre deux parties séparées du racleur mais qui sont reliées fermement entre elles.

16. Racleur selon l'une quelconque des revendications précédentes avec un élément magnétique (19) disposé à l'intérieur du racleur et dont les pôles sont espacés entre eux dans le sens axial, **caractérisé en ce que** sur des côtés du racleur opposés l'un à l'autre dans le sens axial sont prévus des marquages en couleur ayant des teintes différentes entre eux et servant à repérer les pôles magnétiques.

17. Racleur selon la revendication 14 et/ou selon la revendication 15, **caractérisé en ce que** l'élément magnétique ou l'élément en fer est disposé dans une enveloppe au moins partiellement transparente et comprend sur des côtés opposés dans le sens axial des marquages de couleurs différentes qui sont visibles à travers l'enveloppe.

18. Procédé pour la fabrication d'un racleur selon l'une quelconque des revendications précédentes, avec lequel est formé à partir d'un matériau synthétique souple un corps en symétrie de rotation avec deux lèvres d'étanchéité souples et coaxiales (15') qui sont intégrées sa forme, qui sont espacées l'une par rapport à l'autre le long de son axe et qui dépassent dans le sens radial par-dessus la partie du corps située entre elles, **caractérisé en ce que** le contour du corps du racleur et des lèvres d'étanchéité (15') est réalisé par des opérations de tournage.

19. Procédé selon la revendication 18, **caractérisé en ce qu'**après la réalisation du contour du racleur et des lèvres d'étanchéité, les lèvres d'étanchéité (15') sont soumises à une mise en forme sur la base de laquelle leur diamètre extérieur est, dans la position de repos du racleur se trouvant à l'extérieur de la conduire raclée, inférieur à celui qui était le leur après la réalisation du contour.

20. Procédé selon la revendication 18, **caractérisé en ce qu'**après l'opération de tournage pour la mise en forme des lèvres d'étanchéité (15'), le corps de racleur est placé dans une douille (30) dont le diamètre intérieur cylindrique est plus petit que le diamètre extérieur des lèvres d'étanchéité (15') avant leur mise en place et correspond au diamètre extérieur des lèvres d'étanchéité (15) dans la position de fonctionnement du racleur (15) dans la conduire raclée.

21. Procédé selon la revendication 20, **caractérisé en ce que** le corps du racleur est réchauffé dans la douille (30) pour la mise en forme des lèvres d'étanchéité (15').

22. Procédé selon l'une quelconque des revendications 18 à 21, **caractérisé en ce que** deux moitiés d'ébauches cylindriques sont réalisées par des opérations de tournage, **en ce que** dans une des moitiés d'ébauches est introduit un élément magnétique (19) et **en ce que** les deux moitiés d'ébauches sont ensuite reliées fermement entre elles par collage, pour soudure ou d'une autre manière.

23. Procédé selon la revendication 22, **caractérisé en ce que** le contour du racleur et des lèvres d'étanchéité (15') est réalisé par des opérations de tournage effectuées après la liaison des moitiés d'ébauches.

24. Procédé pour la fabrication d'un racleur selon l'une quelconque des revendications 20 à 23 et pour sa manipulation, **caractérisé en ce que** le racleur terminé est conservé et est transporté sur son lieu d'utilisation dans la douille (30).

25. Douille pour le procédé selon l'une quelconque des revendications 20 - 24, **caractérisée en ce que** son compartiment intérieur cylindrique (31) a un diamètre qui est au moins approximativement égal au diamètre intérieur de la conduire dans laquelle doit être placé le racleur et une longueur qui est plus importante que l'espacement axial des extrémités situées le plus à l'extérieur dans le sens axial des deux lèvres d'étanchéité (15) du racleur mis en place et **en ce qu'**en position limitrophe dans le sens axial par rapport au compartiment intérieur cylindrique s'avance de manière coaxiale sur un côté ou sur les deux côtés de la douille (30) un élément annulaire (32) avec lequel la douille peut, pour la mise en place du racleur dans un composant relié avec la conduite, être alignée avec ce composant.
